# EUROPÄISCHE PATENTSCHRIFT

(11) **EP 1 648 817 B1**
(45) Veröffentlichungstag und Bekanntmachung des Hinweises auf die Patenterteilung: **25.10.2006**
(21) Anmeldenummer: 04763481.1
(22) Anmeldetag: 24.07.2004
(51) Int. Cl.: C01B 3/38, C01B 3/48, C01B 3/56, B01D 53/047

(54) **VERFAHREN ZUR GEWINNUNG VON WASSERSTOFF AUS EINEM METHANHALTIGEN GAS, INSBESONDERE ERDGAS UND ANLAGE ZUR DURCHFÜHRUNG DES VERFAHRENS**
METHOD FOR EXTRACTING HYDROGEN FROM A GAS CONTAINING METHANE, ESPECIALLY NATURAL GAS AND SYSTEM FOR CARRYING OUT SAID METHOD
PROCEDE POUR PRODUIRE DE L'HYDROGENE A PARTIR D'UN GAZ CONTENANT DU METHANE, EN PARTICULIER A PARTIR DE GAZ NATUREL, ET DISPOSITIF POUR LA MISE EN OEUVRE DE CE PROCEDE

(30) Priorität: 28.07.2003 DE 10334590
(43) Veröffentlichungstag der Anmeldung: 26.04.2006
(73) Patentinhaber: Uhde GmbH, 44141 Dortmund (DE)
(72) Erfinder: BLUMENFELD, Michael, 44143 Dortmund (DE); LIU, Vincent, 44795 Bochum (DE); MIELKE, Bernd, 44894 Bochum (DE); MICHEL, Marcus, 59423 Unna (DE)
(74) Vertreter: Albrecht, Rainer Harald
(86) Internationale Anmeldenummer: PCT/EP2004/008322
(87) Internationale Veröffentlichungsnummer: WO 2005/012166

(56) Entgegenhaltungen:
- WO-A-02/068084
- DE-A- 3 602 352
- US-A- 4 553 981
- US-A- 5 131 930

## Beschreibung

Die Erfindung betrifft ein Verfahren zur Gewinnung von Wasserstoff aus einem methanhaltigen Gas, insbesondere Erdgas.

Aus US 5 131 930 ist eine konventionelle Wasserstoffanlage bekannt, die mit Erdgas als Einsatzstoff betrieben wird. In der Anlage erfolgt zunächst eine im allgemeinen mit Wasserdampf betriebene katalytische Spaltung von im Erdgas enthaltenen Kohlenwasserstoffen in einem beheizten Reformer zur Erzeugung von Kohlenmonoxid und wasserstoffhaltigem Synthesegas. Danach erfolgt eine katalytische Konvertierung des Kohlenmonoxids zu Wasserstoff und anschließend die Reindarstellung des Wasserstoffes mit Hilfe einer Druckwechseladsorptionsanlage. Die Abgase der Adsorptionsanlage werden zur Brennkammer des Reformers zurückgeführt und dort gemeinsam mit zusätzlich zugeführtem Erdgas verbrannt. Es ist auch bekannt, als zusätzlichen Brennstoff Raffineriegas oder andere Brenngase einzusetzen. Durch die Dampfspaltung des Methans wird eine signifikante Menge Kohlendioxid gemäß dem Wassergasgleichgewicht

CO + H₂O => H₂ + CO₂

erzeugt, die sich in der Konvertierungsstufe durch die Kohlenmonoxid-Konvertierung weiter auf eine Konzentration von im allgemeinen ca. 16 vol. % (trocken) erhöht. Diese Kohlendioxidmenge gelangt über den Kamin der Brennkammer zusammen mit dem durch die Feuerung von zusätzlichen kohlenstoffhaltigen Brennstoffen erzeugten Kohlendioxid in die Atmosphäre.

Der CO₂-Gehalt im Rauchgas liegt im allgemeinen über 20 vol. % (trocken). In einer Raffinerie stellt somit eine derart konzipierte Wasserstoffanlage einen der größten Kohlendioxid-Emittenten dar.

Aus US 4 553 981 ist ein Verfahren zur Gewinnung von Wasserstoff bekannt, bei dem ein kohlenwasserstoffhaltiges Gas mit Dampf reformiert und konvertiert wird. In einer Wäsche wird danach aus dem konvertiertem Gasstrom ein CO₂₋Abgasstrom abgetrennt. Anschließend erfolgt eine Isolierung von Wasserstoff mit Hilfe einer Druckwechseladsorptionsanlage. Der Abgasstrom der Adsorptionsanlage wird verdichtet und in die Reformierung bzw. die Konvertierung zurückgeführt. Hierdurch entstehen große Kreislaufströme. Zur Vermeidung einer Akkumulation von Inertgasen, wie z. B. Stickstoff, muss dem Abgasstrom der Druckwechseladsorptionsanlage ein Purgestrom entnommen werden. Die Befeuerung des Reformers erfolgt auf konventionelle Weise. Das Verfahren ist ferner aufwendig und teuer.

Der Erfindung liegt die Aufgabe zu Grunde, ein einfaches und kostengünstiges Verfahren zur Gewinnung von Wasserstoff aus einem methanhaltigen Gas, insbesondere Erdgas anzugeben, bei dem nur geringe Mengen an Kohlendioxid in die Umgebung abgegeben werden.

Gegenstand der Erfindung und Lösung dieser Aufgabe ist ein Verfahren zur Gewinnung von Wasserstoff aus einem methanhaltigen Gas, insbesondere Erdgas, nach Anspruch 1. In dem Gas enthaltende Kohlenwasserstoffe werden in einem Reformer mittels Wasserdampf katalytisch in Wasserstoff, Kohlenmonoxid und Kohlendioxid gespalten werden, und in einer nachgeschalteten Konvertierungsstufe erfolgt mit Wasserdampf eine katalytische Konvertierung der entstandenen Kohlenmonoxide zu Kohlendioxid und Wasserstoff. Das Kohlendioxid wird mittels einer Gaswäsche aus dem konvertiertem Gasstrom entfernt, und der gewaschene wasserstoffreiche Gasstrom wird anschließend in einer Druckwechseladsorptionsanlage in einen aus Wasserstoff bestehenden Produktgasstrom und einen Abgasstrom getrennt. Der Abgasstrom wird zusammen mit Wasserstoff, der hinter der Gaswäsche aus dem Gasstrom abgezweigt wird, als weitgehend kohlenstofffreies Brenngas dem Reformer zugeführt und dort verbrannt.

Während in dem Reformer eine nahezu vollständige Spaltung der Kohlenwasserstoffe in Wasserstoff, Kohlenmonoxid und Kohlendioxid erfolgt, wird anschließend in der Konvertierungsstufe das entstandene Kohlenmonoxid zu Kohlendioxid umgesetzt, welches in der nachfolgenden Gaswäsche entfernt wird. Das Abgas der Druckwechseladsorptionsanlage enthält daher im Wesentlichen Wasserstoff und nur noch geringe Mengen an Kohlenstoff. Gleiches gilt für den Wasserstoff, der hinter der Gaswäsche aus dem Gasstrom abgezweigt wird. Bei der gemeinsamen Verbrennung dieser beiden Gasströme im Reformer entsteht daher ein überwiegend aus Stickstoff und Wasser bestehendes Abgas, während der Kohlendioxidgehalt gering ist. Durch die Gasrückführung entfällt eine Zusatzfeuerung des Reformers mit kohlenstoffhaltigen Brennstoffen, so dass die Kohlendioxidemmission deutlich sinkt. Im Vergleich zu konventionellen Verfahren kann der Kohlendioxidausstoßes um ca. 75 % gesenkt werden. Bei den verfahrenstechnischen Schritten, die im Rahmen der erfindungsgemäßen Lehre zur Anwendung kommen, handelt es sich ausnahmslos um ausgereifte Technologien, die in der Wasserstoffherstellung bereits seit längerer Zeit erfolgreich eingesetzt werden. Der Aufwand, der für die Erzielung der beschriebenen Kohlendioxid-Reduktion erforderlich ist, ist vergleichsweise gering. Es besteht daher auch die Möglichkeit, eine vorhandene konventionelle Wasserstoffanlage umzurüsten, um mit ihr das erfindungsgemäße Verfahren zu betreiben.

Vorzugsweise wird für die Konvertierungsstufe ein bei mittlerer Temperatur betriebener Konvertierungsreaktor oder ein Hochtemperaturkonvertierungsreaktor mit nachgeschaltetem Tieftemperaturkonvertierungsreaktor verwendet. Hierdurch wird eine nahezu vollständige Konvertierung des entstandenen Kohlenmonoxids zu Kohlendioxid gewährleistet, welches nachfolgend über die Gaswäsche aus dem Gasstrom entfernt werden kann. Bei der Verwendung eines nachgeschalteten Tieftemperaturkonvertierungsreaktors besteht der Vorteil, dass der Hochtemperaturkonvertierungsreaktor einer vorhandenen Wasserstoffanlage weiter genutzt werden kann, wodurch die Umrüstungskosten für eine vorhandene Anlage deutlich gesenkt werden.

Vorzugsweise wird in der Gaswäsche technisch reines Kohlendioxid abgetrennt, welches für technische Anwendungen genutzt oder zu einem Produkt mit einer in der Lebensmittelindustrie einsetzbaren Qualität weiter verarbeitet wird. Neben der Verwendung als Einsatzstoff für die Lebensmittelindustrie kommt als Verwendung des technisch reinen Kohlendioxids beispielsweise die Befüllung einer Erdölbohrung als Maßnahme zur effizienten Erdölförderung in Frage. Alternativ kann das Kohlendioxid auch als Rohstoff für eine Methanolsynthese eingesetzt werden. Die Kohlendioxidwäsche kann hierbei mit bekannten physikalischen Verfahren, wie z. B. Rectisol, Selexol oder Genosorb, oder aber mit einem chemischen bzw. physikalisch/chemischen Verfahren, z. B. aMDEA (wässrige Lösung von N-Methyldiethanolamin) oder Sulfinol, betrieben werden.

Wird eine bestehende H₂-Anlage zum Zwecke der CO₂-Minimierung umgerüstet, wird zweckmäßigerweise der konvertierte Gasstrom vor Eintritt in die neu zu bauende CO₂-Wäsche verdichtet, um den dadurch entstehenden Druckverlust auszugleichen. Hierdurch wird die Wirksamkeit der CO₂-Wäsche erhöht.

Gegenstand der Erfindung ist auch eine Anlage gemäß Anspruch 4 zur Durchführung des Verfahrens. Bevorzugte Ausführungen dieser Anlage sind in den Unteransprüchen 5 und 6 beschrieben.

Im Folgenden wird die Erfindung anhand einer lediglich ein Ausführungsbeispiel darstellenden Zeichnung ausführlich erläutert. Es zeigen schematisch:
- Fig. 1: ein Blockschaltbild eines erfindungsgemäßen Verfahren,
- Fig. 2: ein Blockschaltbild eines erfindungsgemäßen Verfahrens nach Umrüstung einer konventionellen Wasserstoffanlage.

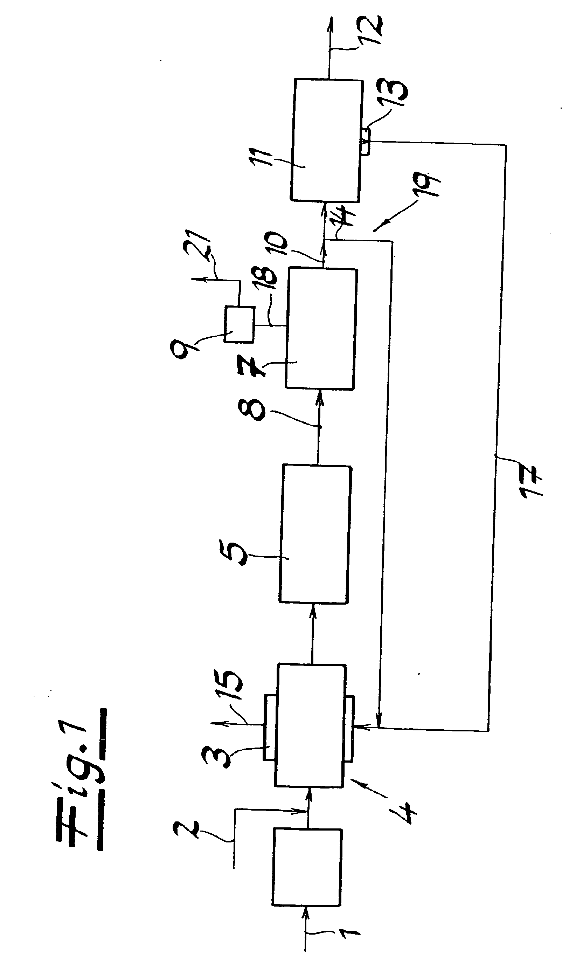

Die Fig. 1 zeigt ein erfindungsgemäßes Verfahren zur Gewinnung von Wasserstoff aus einem methanhaltigen Erdgas. Einem Erdgasstrom 1 wird ein Wasserdampfstrom 2 beigemischt. Die im Erdgas enthaltenen Kohlenwasserstoffe, insbesondere Methan, werden in einem mit einer Brennkammer 3 ausgerüsteten Reformer 4 mit Hilfe des beigemischten Wasserdampfstromes 2 katalytisch in Wasserstoff, Kohlenmonoxid und Kohlendioxid gespalten. Diese Reformierung erfolgt nahezu vollständig, so dass am Austritt des Reformers 4 praktisch keine kohlenwasserstoffhaltigen Gase mehr vorliegen. In einem nachgeschalteten, bei mittlerer Temperatur betriebenen Konvertierungsreaktor 5 erfolgt mit Hilfe des Wasserdampfes eine katalytische Konvertierung des entstandenen Kohlenmonoxids zu Kohlendioxid und Wasserstoff. Auch diese Reaktion verläuft nahezu vollständig, so dass der Kohlenmonoxidgehalt des aus dem Konvertierungsreaktor 5 austretenden Gasstromes 8 kleiner als 1 vol. % (trocken) ist. Anschließend wird das entstandene Kohlendioxid mit Hilfe einer Gaswäsche 7 nahezu vollständig aus dem Gasstrom 8 entfernt. Im Ausführungsbeispiel wird die Gaswäsche 7 mit einer wässrigen Lösung von N-Methyldiethanolamin (aMDEA) als Waschflüssigkeit betrieben. Im Rahmen der Erfindung liegt es jedoch auch, andere bekannte Wäscheverfahren, wie z. B. Rectisol, Selexol, Genosorb oder Sulfinol, einzusetzen. Das in der Wäsche 7 gewonnene Kohlendioxid 18 wird in einer weiteren Reinigungsstufe 9 auf eine in der Lebensmittelindustrie einsetzbare Reinheit weiter aufkonzentriert. Der gewaschene Gasstrom 10 enthält nur noch sehr geringe Mengen an Kohlenstoff und wird anschließend in einer Druckwechseladsorptionsanlage 11 in einen aus Wasserstoff 12 bestehenden Produktgasstrom und einen Abgasstrom 13 getrennt. Der Produktgasstrom 12 weist einen Wasserstoffgehalt von mehr als 99 vol. % auf. Der Abgasstrom 13 enthält im Wesentlichen ebenfalls Wasserstoff und nur geringfügige Mengen an nicht bzw. nur teilweise umgesetzten Kohlenwasserstoffen. Gemeinsam mit einem hinter der Wäsche 7 über eine Einrichtung 19 abgezweigten, im Wesentlichen ebenfalls aus Wasserstoff bestehenden Teilstrom 14, wird der Abgasstrom 13 über eine Leitung 17 der Brennkammer 3 des Reformers 4 zugeführt und dort verbrannt. Die Menge des Teilstromes 14 wird hierbei so eingestellt, dass sie bei der gemeinsamen Verbrennung mit dem Abgasstrom 13 den Energiebedarf des Reformers 4 deckt. Da sowohl der Abgasstrom 13 als auch der Teilstrom 14 überwiegend aus Wasserstoff bestehen und nur geringe Mengen an Kohlenstoff enthalten, weist das Abgas 15 der Brennkammer 4 einen hohen Wasserdampfgehalt und nur einen geringen Kohlendioxidanteil auf. Gegenüber konventionellen Verfahren zur Wasserstoffgewinnung, bei denen die Brennkammer mit kohlenstoffhaltigen Brennstoffen, wie z. B. Erdgas und kohlenwasserstoffhaltigen Abgasen, befeuert wird, zeichnet sich das erfindungsgemäße Verfahren somit durch eine geringe Kohlendioxidemission auf.

Bei den beschriebenen Verfahrensschritten, die im Rahmen der erfindungsgemäßen Lehre zur Anwendung kommen, handelt es sich durchweg um technisch ausgereifte Technologien, die sich sowohl bei der Herstellung von Wasserstoff als auch bei der Produktion von Ammoniak bewährt haben. Der Reformer 4 muss lediglich ausreichend groß bemessen sein, um die H₂₋Produktion einschließlich der Brenngasversorgung nach der CO₂-Wäsche zu gewährleisten. Der Konvertierungsreaktor 5 wird bei mittlerer Temperatur betrieben, um eine nahezu vollständige Konvertierung des entstandenen Kohlenmonoxids zu Kohlendioxid sicherzustellen. Das im Ausführungsbeispiel mittels der Reinigungsstufe 9 gewonnene Kohlendioxid 21 kann in der Lebensmittelindustrie weiter verarbeitet werden. Alternativ hierzu besteht jedoch auch die Möglichkeit, das in der Wäsche 7 gewonnene technisch reine Kohlendioxid 18 direkt für technische Anwendungen zu nutzen. Hierbei kommt beispielsweise die Befüllung einer Erdölbohrung als Maßnahme zur effizienten Erdölförderung oder aber auch die Verwendung als Rohstoff für eine Methanolsynthese in Frage.

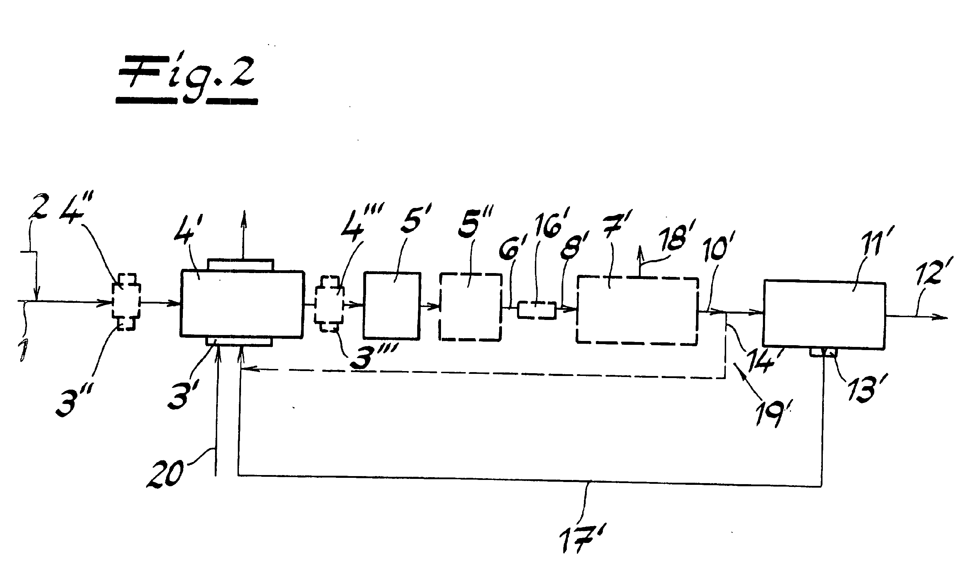

Der Aufwand zur Durchführung des beschriebenen Verfahrens ist vergleichsweise gering. Insbesondere besteht die Möglichkeit, eine vorhandene konventionelle Wasserstoffanlage so umzurüsten, dass mit ihr das erfindungsgemäße Verfahren betrieben werden kann. Die Fig. 2 zeigt eine erfindungsgemäß umgerüstete konventionelle Wasserstoffanlage. Die bereits vorhandenen Anlagenkomponenten sind mit durchgezogenen Linien gekennzeichnet, während die im Rahmen der Umrüstung hinzugefügten Bestandteile gestrichelt dargestellt sind. Die konventionelle Wasserstoffanlage weist einen mit einer Brennkammer 3' ausgerüsteten Reformer 4' zur katalytischen Spaltung von gasförmigen Kohlenwasserstoffen mit Wasserdampf auf. Dahinter ist ein Hochtemperaturkonvertierungsreaktor 5' zur katalytischen Konvertierung von Kohlenmonoxid mit Wasserdampf zu Kohlendioxid und Wasserstoff angeordnet. Hieran schließt sich eine Druckwechseladsorptionsanlage 11' zur Isolierung von Wasserstoff 12' aus dem konvertierten Gasstrom 8' mit angeschlossener Gasleitung 17' zur Brennkammer 3' zwecks Befeuerung des Reformers 4' mit einem aus der Adsorptionsanlage 11' austretenden Abgasstrom 13' an. Im Rahmen der Umrüstung wurde die Kapazität des Reformierungsschrittes durch einen dem Reformer 4' vorgeschalteten Pre-Reformer 4" sowie einem dem Reformer 4' nachgeschalteten Post-Reformer 4'" um ca. 20 % erhöht. Gegebenenfalls reicht es jedoch auch aus, nur einen der beiden zusätzlichen Reformer 4", 4"' vorzusehen. Der Hochtemperaturkonvertierungsreaktor 5', welcher im allgemeinen bei Temperaturen zwischen 360 und 500°C arbeitet, wurde durch einen nachgeschalteten, im Bereich von ca. 210 bis 270°C arbeitenden, Niedertemperaturkonvertierungsreaktor 5" ergänzt, um eine möglichst vollständige Konvertierung des Kohlenmonoxids zu Kohlendioxid zu erreichen. Alternativ hierzu kann der bestehende Hochtemperaturkonvertierungsreaktor 5' auch durch einen bei mittlerer Temperatur arbeitenden Konvertierungsreaktor ersetzt werden. Zwischen der Konvertierungsstufe und der Druckwechseladsorptionsanlage 11' wurde ein Gaskompressor 16' zur Verdichtung des Gasstromes 6' sowie eine Gaswäsche 7' zur Abtrennung des entstandenen vorgesehen, wobei im Ausführungsbeispiel das in der Gaswäsche 7' gewonnene Kohlendioxid 18' direkt einer technischen Anwendung zugeleitet wird. Zwischen der Wäsche 7' und der Druckwechseladsorptionsanlage 11' wurde eine zusätzliche Einrichtung 19' für die Rückführung eines Teils 14' des den Gaswäscher verlassenden wasserstoffreichen Gasstromes 10' in die Brennkammer 3', 3", 3"' der Reformer 4', 4", 4"' vorgesehen. Abschließend erfolgte eine Anpassung des vorhandenen Reformers 4' an die Verbrennung sowie die Abwärmenutzung des nun wasserstoffreichen Brennstoffes. Die vorhandene Gasleitung 20 für die Zuführung von kohlenwasserstoffhaltigen Brenngasen in die Brennkammer 3' des Reformers 4' wird nicht mehr genutzt. Die Darstellung in Fig. 2 zeigt, dass mit vergleichsweise geringem Aufwand eine konventionelle Wasserstoffanlage derart umrüstbar ist, dass mit ihr das erfindungsgemäße Verfahren betrieben werden kann. Hierdurch wird die Attraktivität des erfindungsgemäßen Verfahrens weiter erhöht.

## Patentansprüche

1. Verfahren zur Gewinnung von Wasserstoff aus einem methanhaltigen Gas, insbesondere Erdgas,
wobei in dem Gas enthaltene Kohlenwasserstoffe in einem Reformer (4) mittels Wasserdampf katalytisch in Wasserstoff, Kohlenmonoxid und Kohlendioxid gespalten werden und in einer nachgeschalteten Konvertierungsstufe mit Wasserdampf eine katalytische Konvertierung des entstandenen Kohlenmonoxids zu Kohlendioxid und Wasserstoff erfolgt,
wobei das Kohlendioxid mittels einer Gaswäsche (7) aus dem konvertierten Gasstrom (8) entfernt und der gewaschene wasserstoffreiche Gasstrom (10) anschließend in einer Druckwechseladsorptionsanlage (11) in einen aus Wasserstoff bestehenden Produktgasstrom (12) und einen Abgasstrom (13) getrennt wird und
wobei der Abgasstrom (13) zusammen mit Wasserstoff (14), der hinter der Gaswäsche (7) aus dem Gasstrom (10) abgezweigt wird, als weitgehend kohlenstofffreies Brenngas dem Reformer (4) zugeführt und dort verbrannt wird.

2. Verfahren nach Anspruch 1, **dadurch gekennzeichnet, dass** für die Konvertierungsstufe ein bei mittlerer Temperatur betriebener Konvertierungsreaktor (5) oder ein Hochtemperaturkonvertierungsreaktor (5') mit nachgeschaltetem Tieftemperaturkonvertierungsreaktor (5") verwendet wird.

3. Verfahren nach Anspruch 1 oder 2, **dadurch gekennzeichnet, dass** in der Gaswäsche (7) technisch reines Kohlendioxid (18) abgetrennt wird, welches für technische Anwendungen genutzt oder zu einem Produkt (21) mit einer in der Lebensmittelindustrie einsetzbaren Qualität weiter verarbeitet wird.

4. Anlage zur Durchführung des Verfahrens nach einem der Ansprüche 1 bis 3 mit
- mindestens einem mit einer Brennkammer (3) ausgerüsteten Reformer (4) zur katalytischen Spaltung von gasförmigen Kohlenwasserstoffen mit Wasserdampf,
- einer Konvertierungsstufe mit mindestens einem Konvertierungsreaktor (5) zur katalytischen Konvertierung von Kohlenmonoxid mit Wasserdampf zu Kohlendioxid und Wasserstoff,
- einer Gaswäsche (7) zur Abtrennung von Kohlendioxid aus dem die Konvertierungsstufe verlassenden Gastrom (8) und
- einer nachgeschalteten Druckwechseladsorptionsanlage (11) zur Isolierung von Wasserstoff (12), an die eine zur Brennkammer (3) zurückgeführte Gasleitung (17) zur Befeuerung des Reformers mit einem aus der Adsorptionsanlage austretenden Gastrom angeschlossen ist,
wobei eine zusätzliche Einrichtung (19) für die Rückführung eines Teils (14) des die Gaswäsche (7) verlassenden wasserstoffreichen Gasstromes (10) in die Brennkammer (3) des Reformers (4) vorgesehen ist.

5. Anlage nach Anspruch 4, **dadurch gekennzeichnet, dass** die Konvertierungsstufe einen bei mittlerer Temperatur betriebenen Konvertierungsreaktor (5) oder einen Hochtemperaturkonvertierungsreaktor (5') mit nachgeschaltetem Tieftemperaturkonvertierungsreaktor (5") umfasst.

6. Anlage nach Anspruch 4 oder 5, **dadurch gekennzeichnet, dass** sich an den Kohlendioxidabgang der Gaswäsche (7) eine Reinigungsstufe (9) zur Aufkonzentrierung des abgetrennten Kohlendioxids (18) anschließt.

## Claims

1. Method for extracting hydrogen from a methane-containing gas, in particular natural gas,
wherein hydrocarbons contained in the gas are catalytically split into hydrogen, carbon monoxide and carbon dioxide in a reformer (4) by means of steam, and catalytic conversion of the resulting carbon monoxide to carbon dioxide and hydrogen takes place in a downstream conversion stage by means of steam,
wherein the carbon dioxide is removed from the converted gas stream (8) by means of a gas scrubber (7), and the scrubbed hydrogen-rich gas stream (10) is then separated in a pressure swing adsorption system (11) into a product gas stream (12) consisting of hydrogen and a waste gas stream (13), and
wherein the waste gas stream (13), together with hydrogen (14) which is branched off from the gas stream (10) behind the gas scrubber (7), is passed to the reformer (4) as a combustion gas that is largely free of carbon, and burned there.

2. Method according to Claim 1, **characterized in that**, for the conversion stage, use is made of a conversion reactor (5) which is operated at medium temperature or of a high-temperature conversion reactor (5') with a downstream low-temperature conversion reactor (5").

3. Method according to Claim 1 or 2, **characterized in that** technically pure carbon dioxide (18) is separated in the gas scrubber (7), which is used for technical applications or processed further to produce a product (21) having a quality that can be used in the food industry.

4. System for carrying out the method according to one of Claims 1 to 3, comprising
- at least one reformer (4) equipped with a combustion chamber (3), for catalytic splitting of gaseous hydrocarbons by means of steam,
- a conversion stage comprising at least one conversion reactor (5) for catalytic conversion of carbon monoxide by means of steam to give carbon dioxide and hydrogen,
- a gas scrubber (7) for separating carbon dioxide from the gas stream (8) which leaves the conversion stage, and
- a downstream pressure swing adsorption system (11) for isolating hydrogen (12), to which there is connected a gas line (17) which is passed back to the combustion chamber (3) in order to fire the reformer with a gas stream which exits from the adsorption system,
wherein an additional device (19) is provided for passing back, into the combustion chamber (3) of the reformer (4), part (14) of the hydrogen-rich gas stream (10) which leaves the gas scrubber (7).

5. System according to Claim 4, **characterized in that** the conversion stage comprises a conversion reactor (5) which is operated at medium temperature or a high-temperature conversion reactor (5') with a downstream low-temperature conversion reactor (5").

6. System according to Claim 4 or 5, **characterized in that** a purification stage (9) for concentrating the separated carbon dioxide (18) follows the carbon dioxide exit of the gas scrubber (7).

## Revendications

1. Procédé de production d'hydrogène à partir d'un gaz renfermant du méthane, en particulier de gaz naturel,
dans lequel des hydrocarbures contenus dans le gaz sont soumis à un craquage catalytique à la vapeur d'eau dans un réacteur de réformage (4) en hydrogène, oxyde de carbone et gaz carbonique et une conversion catalytique de l'oxyde de carbone formé en gaz carbonique et hydrogène est effectuée dans un étage de conversion aval avec de la vapeur d'eau,
dans lequel le gaz carbonique est éliminé du flux de gaz converti (8) au moyen d'un lavage de gaz (7) et le flux de gaz riche en hydrogène (10) lavé est ensuite séparé dans une installation d'absorption modulée en pression (11) en un flux de gaz produit (12) composé d'hydrogène et en un flux de gaz de combustion (13) et
dans lequel le flux de gaz de combustion (13) avec l'hydrogène (14), dérivé du flux de gaz (10) en aval du lavage de gaz (7), est recyclé dans le réacteur de réformage (4) sous forme de combustible gazeux largement exempt de carbone et y est brûlé.

2. Procédé suivant la revendication 1, **caractérisé en ce qu'**un réacteur de conversion (5) exploité à température moyenne ou un réacteur de conversion à haute température (5') avec un réacteur de conversion à basse température aval (5") est utilisé pour l'étage de conversion.

3. Procédé suivant l'une des revendications 1 ou 2, **caractérisé en ce que** du gaz carbonique techniquement pur (18) est séparé dans le lavage de gaz (7), lequel gaz carbonique est utilisé pour des applications industrielles ou est traité ultérieurement en un produit (21) d'une qualité utilisable dans l'industrie alimentaire.

4. Installation pour la mise en oeuvre du procédé suivant l'une des revendications 1 à 3 comprenant
au moins un réacteur de réformage (4) équipé d'une chambre de combustion (3) pour le craquage catalytique d'hydrocarbures gazeux à la vapeur d'eau,
un étage de conversion avec au moins un réacteur de conversion (5) pour la conversion catalytique d'oxyde de carbone à la vapeur d'eau en gaz carbonique et hydrogène,
un lavage de gaz (7) pour séparer le gaz carbonique du flux de gaz (8) sortant de l'étage de conversion et
une installation d'adsorption modulée de pression (11) aval pour l'isolation d'hydrogène (12), à laquelle se raccorde une conduite de gaz (17) renvoyée dans la chambre de combustion (3) pour le chauffage du réacteur de réformage par un flux de gaz sortant de l'installation d'adsorption,
dans laquelle il est prévu un dispositif supplémentaire (19) pour le recyclage d'une partie (14) du flux de gaz riche en hydrogène (10), sortant du lavage de gaz (7), dans la chambre de combustion (3) du réacteur de réformage (4).

5. Installation suivant la revendication 4, **caractérisée en ce que** l'étage de conversion comprend un réacteur de conversion (5) exploité à température moyenne ou un réacteur de conversion à haute température (5') avec un réacteur de conversion à basse température (5") aval.

6. Installation suivant l'une des revendications 4 ou 5, **caractérisée en ce qu'**un étage d'épuration (9) pour la concentration du gaz carbonique (18) séparé se raccorde à la sortie de gaz carbonique du lavage de gaz (7).
